# EUROPEAN PATENT APPLICATION

(11) **EP 1 607 982 A2**
(43) Date of publication of application: **21.12.2005**
(21) Application number: 04029879.6
(22) Date of filing: 16.12.2004
(51) Int. Cl.: G11C 13/04, G03H 1/04, G11B 7/135, G11B 7/26, G11B 7/0065

(54) **Holographic data recording apparatus and method**

(30) Priority: 08.06.2004 KR 2004041887
(71) Applicant: Daewoo Electronics Corporation, Seoul (KR)
(72) Inventor: Moon, Jin Bae, c/o Daewoo Electronics Corp., Mapo-gu Seoul (KR)
(74) Representative: Jacoby, Georg

(57) **Abstract**

A holographic data recording apparatus includes: a signal beam patterning unit for irradiating a signal beam (S1) onto a holographic medium (50), the signal beam including a data pattern (48) to be recorded; and a cylindrical optical body (102) including a cylindrical reflective surface, by which a reference beam (S21,S22) incident thereto is reflected toward the holographic medium (50) at a predetermined angle, wherein the data pattern is recorded on the holographic medium by interfering the signal beam with the reference beam on the holographic medium. The holographic data recording speed is increased and the cost of the holographic data recording apparatus is reduced.

## Description

The present invention relates to holographic data recording apparatus and method; and more particularly, to holographic data recording apparatus and method capable of recording a plurality of holographic data in a holographic medium by angular multiplexing using a cylindrical optical body.

Conventional holographic memory systems normally employ a page-by-page storage approach. An input device such as SLM (spatial light modulator) presents recording data in the form of a two dimensional array (referred to as a page), while a detector array such as CCD camera is used to retrieve the recorded data page upon readout. Other architectures have also been proposed wherein a bit-by-bit recording is employed in lieu of the page-by-page approach. All of these systems, however, suffer from a common drawback that they require the recording of huge quantities of separate holograms in order to fill the memory to its full capacity. A typical page-oriented system using a megabit-sized array would require the recording of hundreds of thousands of hologram pages to reach the capacity of 100 GB or more. Even with the hologram exposure times of millisecond-order, the total recording time required for filling a 100 GB-order memory may easily amount to at least several tens of minutes, if not hours. Thus, another conventional holographic ROM system has been developed, where the time required to produce a 100 GB-order capacity disc may be reduced to under a minute, and potentially to the order of seconds.

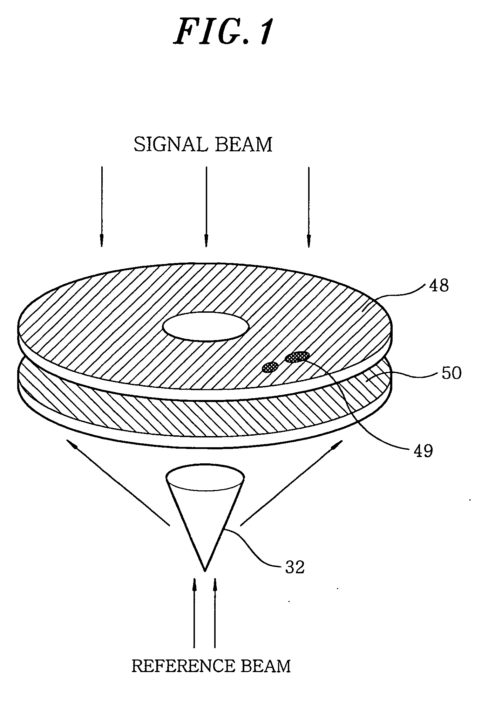

Fig. 1 is a view schematically illustrating a conventional method for recording data on a disc-type holographic medium. As shown in Fig. 1, a data mask 48 is placed above a holographic medium 50 which serves as an optical data storage medium, while a conical mirror 32 is placed below the holographic medium 50. To record data on the holographic medium 50, a signal beam is irradiated downward onto the upper surface of the holographic medium 50 via a bit pattern of the data mask 48 and at the same time, a reference beam is irradiated onto the lower surface of the holographic medium 50 after the reflection by the conical mirror 32. The signal beam is interfered with the reference beam at the holographic medium 50, thereby recording the holographic data on the holographic medium 50 according to the bit pattern of the data mask 48.

When conical mirrors having different base angles are used, it is possible to record a plurality of holographic data in the same physical space of the holographic medium 50 by angular multiplexing (see "Holographic disk recording system", US patent application publication No. US2003/0161246A1, by Ernest Chuang, et al.).

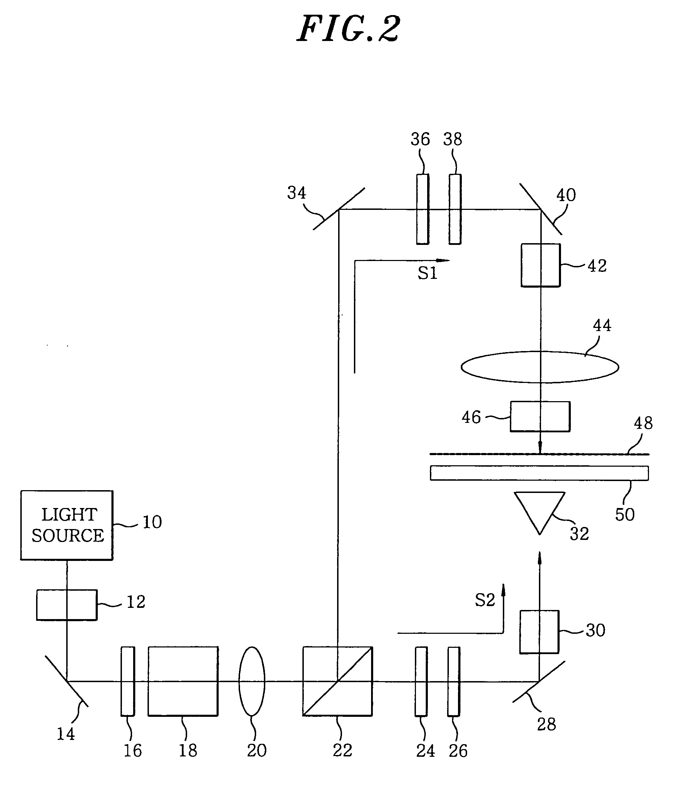

Fig. 2 shows a conventional holographic ROM system including a light source 10; a shutter 12; mirrors 14, 28, 34, 40; HWPs (half wave plates) 16, 24, 36; spatial filters 18, 30, 42; lenses 20, 44; a PBS (polarization polarization beam splitter) 22; polarizers 26, 38; a conical mirror 32; a data mask 48; and a holographic medium 50.

The light source 10 emits a laser beam with a constant wavelength, e.g., a wavelength of 532 nm. The laser beam, which is of only one type of linear polarization, e.g., P-polarization or S-polarization, is provided to the mirror 14 via the shutter 12 which is opened to transmit the laser beam therethrough when recording data on the holographic medium 50. The mirror 14 reflects the laser beam to the HWP 16. The HWP 16 rotates the polarization of the laser beam by θ degree (preferably 45°). And then, the polarization-rotated laser beam is fed to the spatial filter 18 for removing noises included in the polarization-rotated laser beam. And then, the polarization-rotated laser beam is provided to the lens 20 for expanding the beam size of the laser beam up to a predetermined size. Thereafter, the expanded laser beam is provided to the PBS 22.

The PBS 22, which is manufactured by repeatedly depositing at least two kinds of materials each having a different refractive index, serves to transmit, e.g., a horizontally polarized laser beam, i.e., P-polarized beam, along a S1 path and reflect, e.g., a vertically polarized laser beam, i.e., S-polarized beam, along a S2 path. Thus the PBS 22 divides the expanded laser beam into a transmitted laser beam (hereinafter called a reference beam) and a reflected laser beam (hereinafter called a signal beam) having different polarizations, respectively.

The signal beam, e.g., of a S-polarization, is reflected by the mirror 34. And then the reflected signal beam is provided to the mirror 40 via the HWP 36 and the polarizer 38 sequentially. Since the HWP 36 can rotate the polarization of the signal beam by θ' degree and the polarizer 38 serves to pass only a P-polarized signal beam, the HWP 36 and the polarizer 38 can regulate the amount of the P-polarized signal beam arriving at the mirror 40 by changing θ'. And then the P-polarized signal beam is reflected by the mirror 40 toward the spatial filter 42 for removing spatial noise of the signal beam and allowing a Gaussian beam thereof to be transmitted therethrough. And then the signal beam which is a perfect Gaussian is provided to the lens 44 for expanding the beam size of the signal beam up to a preset size. Thereafter, the expanded signal beam is projected onto the holographic medium 50 via the data mask 48. The data mask 48, presenting data patterns for recording, functions as an input device, e.g., a spatial light modulator (SLM).

Meanwhile, the reference beam is fed to the mirror 28 via the HWP 24 and the polarizer 26 sequentially. Since the HWP 24 can rotate the polarization of the reference beam by θ" degree and the polarizer 26 serves to pass only a P-polarized reference beam, the HWP 24 and the polarizer 26 can regulate the amount of the P-polarized reference beam arriving at the mirror 28 by changing θ". Therefore, the polarization of the reference beam becomes identical to that of the signal beam. And then the mirror 28 reflects the P-polarized reference beam toward the spatial filter 30 which removes spatial noise of the signal beam and allows a Gaussian beam thereof to be transmitted therethrough. And then the reference beam which is a perfect Gaussian beam is projected onto the conical mirror 32 (the conical mirror 32 being of a circular cone having a circular base with a preset base angle between the circular base and the cone), which is fixed by a holder (not shown). The conical mirror 32 reflects the reference beam toward the holographic medium 50. The incident angle of the reflected reference beam on the holographic medium 50 is determined by the base angle of the conical mirror 32.

When conical mirrors having different base angles are used in the above-mentioned holographic data recording apparatus, it is possible to record holographic data in the same physical space of the holographic medium 50 by angular multiplexing. In other words, another conical mirror having a base angle different from the base angle of the conical mirror 32 is used in the holographic data recording apparatus, in place of the conical mirror 32, the incident angle of the reference beam irradiated onto the holographic medium 50 is changed so that the reference beam and the signal beam provide a new interference pattern. Thus, new holographic data can be recorded on the holographic medium 50 by angular multiplexing.

However, the conventional holographic data recording apparatus is problematic in that, in order to reflect a reference beam toward a disc-type holographic medium at a desired incident angle, it is necessary to use a conical mirror having a specified base angle capable of providing the desired incident angle. Thus, to record a plurality of holographic data on a holographic medium by angular multiplexing, the required number of conical mirrors must be the same as the desired number of the incident angles of the reference beam, so that the cost of the holographic data recording apparatus is increased.

Furthermore, the replacement of every conical mirror is a difficult and complex process so that the recording speed is decreased.

It is, therefore, an object of the present invention to provide holographic data recording apparatus and method capable of recording a plurality of holographic data in the same physical space of a holographic medium by angular multiplexing, the incident angle of a reference beam being changed by using only one cylindrical optical body, thus increasing the holographic data recording speed and reducing the cost thereof.

In a first aspect of the present invention, there is provided a holographic data recording apparatus including: a signal beam patterning unit for irradiating a signal beam onto a holographic medium, the signal beam including a data pattern to be recorded; and a cylindrical optical body including a cylindrical reflective surface, by which a reference beam incident thereto is reflected toward the holographic medium at a predetermined angle, wherein the data pattern is recorded on the holographic medium by interfering the signal beam with the reference beam on the holographic medium.

In a second aspect of the present invention, there is provided a holographic data recording apparatus including: a light source for generating a laser beam; a first polarization beam splitting unit for splitting the laser beam into a signal beam and a reference beam; a signal beam patterning unit for irradiating a signal beam onto a holographic medium, the signal beam including a data pattern to be recorded; a cylindrical optical body including a cylindrical reflective surface, by which a reference beam incident thereto is reflected toward the holographic medium at a predetermined angle; and an incident angle control unit for controlling the incident angle of the reference beam irradiated onto the cylindrical optical body, wherein the data pattern is recorded on the holographic medium by interfering the signal beam with the reference beam on the holographic medium.

In a third aspect of the present invention, there is provided a holographic data recording apparatus including: a signal beam patterning unit for irradiating a signal beam onto a holographic medium, the signal beam including a data pattern to be recorded; and a taper-shaped beam generating unit for converting a reference beam incident thereto into a taper-shaped beam having a circular cross-section at each end thereof and then irradiating the converted reference beam onto the holographic medium, wherein the data pattern is recorded on the holographic medium by interfering the signal beam with the reference beam on the holographic medium.

In a fourth aspect of the present invention, there is provided a holographic data recording method for recording a data pattern on a holographic medium by interfering a signal pattern including the data pattern thereon with a reference beam on the holographic medium, the method including the steps of: irradiating the reference beam onto a cylindrical optical body, which reflects the reference beam toward the holographic medium, thereby interfering the reference beam with the signal beam on the holographic medium to record the data pattern on the holographic medium; and adjusting the incident angle of the reference beam irradiated onto the cylindrical optical body, thereby changing the incident angle of the reference beam irradiated onto the holographic medium after reflected by the cylindrical optical body in order to record a new data pattern on the holographic medium by angular multiplexing.

In a fifth aspect of the present invention, there is provided a holographic data recording method including the steps of: splitting a reference beam emitted from a light source into a first reference beam and a second reference beam; irradiating the first and the second reference beams onto an optical body at first symmetrical angles which are symmetrical around a central axis of the optical body; reflecting the first and the second reference beams by the optical body, thereby irradiating the first and the second reference beams onto a holographic medium at second symmetrical angles which are symmetrical around the central axis of the optical body; and interfering the first and the second reference beams with a signal beam including a data pattern thereon on the holographic medium, thereby recording the data pattern on the holographic medium.

In a sixth aspect of the present invention, there is provided a holographic data recording method including the steps of: splitting a reference beam emitted from a light source into N sub-reference beams; irradiating the sub-reference beams onto an optical body such that the sub-reference beams are directed to a central axis of the optical body; reflecting the sub-reference beams by the optical body, thereby irradiating the sub-reference beams onto a holographic medium at predetermined incident angles which are symmetrical around the central axis of the optical body; and interfering the sub-reference beams with a signal beam including a data pattern thereon on the holographic medium, thereby recording the data pattern on the holographic medium, wherein N is a natural number.

The above and other objects and features of the present invention will become apparent from the following description of preferred embodiments given in conjunction with the accompanying drawings, in which:
Fig. 1 is a view schematically illustrating a conventional holographic data recording method;
Fig. 2 shows a view illustrating the configuration of a conventional holographic data recording apparatus;
Fig. 3 represents a view schematically illustrating a holographic data recording method in accordance with the present invention;
Fig. 4 offers a view illustrating optical paths of an incident beam and a reflected beam of a cylindrical mirror in accordance with the present invention; and
Fig. 5 presents a view illustrating the configuration of a holographic data recording apparatus in accordance with the present invention.

Preferred embodiments of the present invention will now be described in detail with reference to the accompanying drawings.

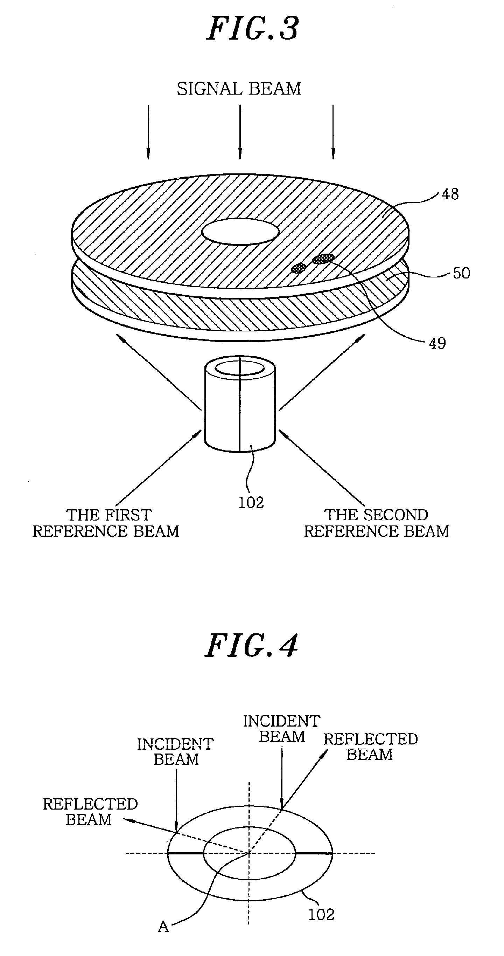

Fig. 3 is a view schematically illustrating a holographic data recording method in accordance with the present invention.

A data mask 48 is placed above a holographic medium 50 so that a signal beam is irradiated onto the upper surface of the medium 50 via the data mask 48 having a data pattern thereon. Furthermore, a cylindrical mirror 102 having a cylindrical reflective surface is placed below the holographic medium 50. To record data on the holographic medium 50, the signal beam is projected onto the upper surface of the holographic medium 50, after passing through a bit pattern 49 on the data mask 48. At the same time, a first reference beam and a second reference beam are symmetrically irradiated at the same incident angle onto the cylindrical reflective surface of the cylindrical mirror 102 which is placed below the holographic medium 50. Thereafter, the first and the second reference beams are symmetrically reflected by the cylindrical reflective surface of the cylindrical mirror 102 thereby being irradiated onto the lower surface of the holographic medium 50 in outward radial directions thereof.

Each of the first and the second reference beams, which are reflected by the cylindrical reflective surface of the cylindrical mirror 102 toward the holographic medium 50, has a half taper-shaped cross-section. The first and the second reference beams individually have a semicircular optical cross-section at each end thereof, with the center of the semicircular cross-section located at a central axis of the holographic medium 50. Therefore, the first and the second reference beams are integrated into a complete taper-shaped reference beam having a circular optical cross-section at each end thereof. The complete taper-shaped reference beam is interfered with the signal beam at the holographic medium 50, so that holographic data can be recorded on the holographic medium 50 in accordance with the bit pattern of the data mask 48.

The reflected angles of the first and the second reference beams which are reflected by the cylindrical mirror 102 may be controlled by changing the incident angles of the first and the second reference beams projected onto the cylindrical mirror 102. Thus, the incident angles of the first and the second reference beams onto the holographic medium 50 may be controlled by changing the incident angles of the first and the second reference beams onto the cylindrical mirror 102, resulting in the angular multiplexing.

Fig. 4 is a view illustrating the optical reflection properties of the cylindrical mirror 102. The point A in Fig. 4 denotes the focus of the cylindrical mirror 102, which is disposed on the central axis of the holographic medium 50. Due to the optical reflection properties of the cylindrical mirror 102, parallel incident lights projected onto the cylindrical mirror 102 are reflected by the cylindrical mirror 102 as if the reflected lights are emitted from a virtual point light source which is located at the focus A of the cylindrical mirror 102.

Thus, since the focus A is located on the central axis of the holographic medium 50 as described above, the first and the second reference beams which are incident on the cylindrical mirror 102 are always reflected by the cylindrical reflective surface so that, if viewed from the top of the holographic medium 50, they are emitted from a virtual point light source which is located at the central axis of the holographic medium 50. To reflect the first and the second reference beams which are incident on the cylindrical mirror 102 toward all of the 360° angular area of the disc-type holographic medium 50, two semicylindrical mirrors each having a 180° angular reflective surface are assembled into the cylindrical mirror 102 as shown in Figs. 3 and 4. When the first and the second reference beams are symmetrically projected onto the reflective surface of the cylindrical mirror 102, the first and the second reference beams are reflected toward all of the 360° angular area in the same manner as that described for the conical mirror of Fig. 1.

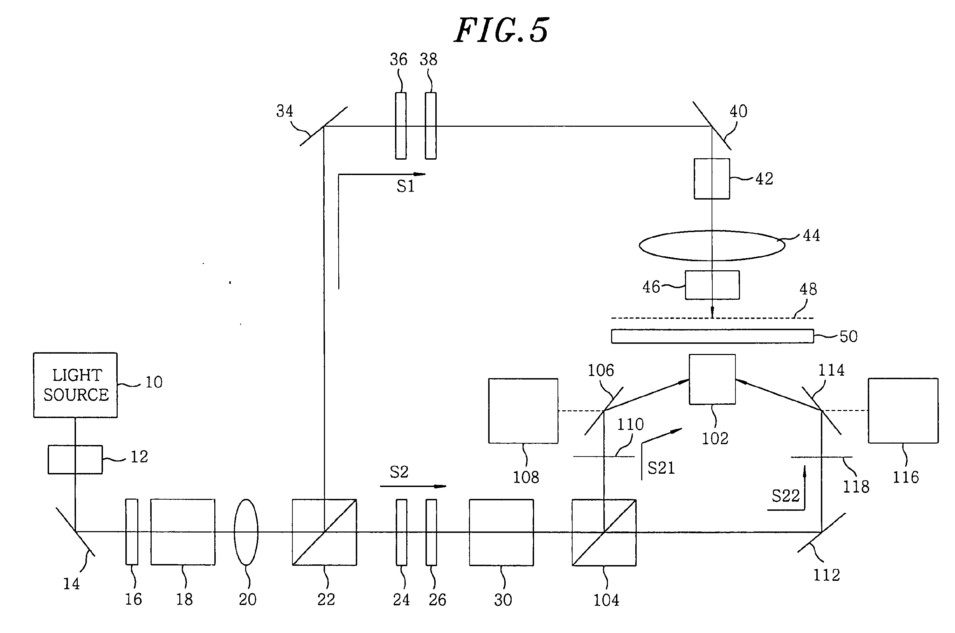

Fig. 5 is a view illustrating the configuration of a holographic data recording apparatus in accordance with the present invention, wherein like parts appearing in Fig. 2 are represented by like reference numerals. As shown in Fig. 5, the holographic data recording apparatus in accordance with the present invention comprises a light source 10; mirrors 14, 34, 40, 106, 112, 114; polarization beam splitters (PBSs) 22, 104; a cylindrical mirror 102; rectangular slots 110, 118 for forming rectangular beams; a first incident angle control unit 108; a second incident angle control unit 116; a data mask 48; and a holographic medium 50. Moreover, the holographic data recording apparatus further comprises a shutter 12; Half Wave Plates (HWPs) 16, 24, 35; spatial filters 18, 30, 42; magnifying lenses 20, 44; and polarizers 26, 38.

The laser beam emitted from the light source 10 is linear-polarized, e.g., P- or S-polarized. The laser beam emitted from the light source 10 is splitted by the PBS 22 and then propagates along two optical paths S1 and S2. Thereafter, the splitted laser beam propagating along the optical path S2 is splitted by PBS 104 and then propagates along two optical paths S21 and S22.

A signal beam splitted by the PBS 22 propagates along the optical path S1 and then irradiated onto the holographic medium 50 in the same manner as that described for the conventional holographic data recording apparatus of Fig. 1.

A reference beam, splitted by the PBS 22, propagates along the optical path S2, i.e., passes through the HWP 24, the polarizer 26, the spatial filter 30, the PBS 104 in that order. The reference beam is splitted by the PBS 104 into a first reference beam which is propagating along the optical path S21 and a second reference beam which is propagating along the optical path S22.

On the optical path S21, the first reference beam in the form of a circular beam is converted into a first reference beam in the form of a rectangular beam by the rectangular slot 110 and then the first reference beam in the form of the rectangular beam is provided to the mirror 106. Thereafter, the mirror 106 reflects the first reference beam toward the cylindrical mirror 102. At the cylindrical mirror 102, the first reference beam is reflected toward the holographic medium 50.

On the optical path S22, the second reference beam in the form of a circular beam is reflected by the mirror 112 toward the rectangular slot 118, and then converted into a rectangular beam by the rectangular slot 118 and then the second reference beam in the form of the rectangular beam is provided to the mirror 114. Thereafter, the mirror 114 reflects the second reference beam toward the cylindrical mirror 102. At the cylindrical mirror 102, the second reference beam is reflected toward the holographic medium 50.

Since the signal beam, the first reference beam and the second reference beam which are irradiated onto the holographic medium 50 are controlled to have the same polarization pattern, the signal beam is interfered with the first and the second reference beams on the holographic medium 50. For example, when the signal beam is S-polarized, the first and the second reference beams must also be S-polarized. Furthermore, the first and the second reference beams are irradiated onto the cylindrical mirror 102 at the same incident angle in symmetrical directions, and then reflected by the cylindrical mirror 102 at the same reflection angle in symmetrical directions toward the holographic medium 50.

Considering the plan view of the cylindrical mirror 102 observed at the mirrors 106 and 114 which are respectively placed on the optical paths S1 and S2, the cylindrical mirror 102 looks like a rectangular shape. Thus, when the circular first and second reference beams are converted into the rectangular first and second reference beams by the rectangular slots 110 and 118, the size, i.e., breadth, of each of the rectangular first and second reference beams must be adjusted to be equal to the size, i.e., diameter, of the cylindrical mirror 102. In case the first and the second reference beams are not adjusted to the size of the cylindrical mirror 102, the undesired interference pattern of the signal and the reference beams may be generated on the holographic medium 50.

The holographic data recording apparatus in accordance with the present invention can record new holographic data in the same physical space of the holographic medium 50 by angular multiplexing while controlling arrangement angles of the mirrors 106 and 114 as described in Fig. 3. In other words, when the arrangement angles of the mirrors 106 and 114 are controlled by the first and the second incident angle control units 108 and 116, the incident angles of the first and the second reference beams irradiated onto the cylindrical mirror 102 are changed. Thus, the reflection angles of the first and the second reference beams reflected by the cylindrical mirror 102 are changed so that the incident angles of the first and the second reference beams irradiated onto the holographic medium 50 are also changed. Therefore, the first and the second reference beams whose incident angles are changed are interfered with the signal beam on the holographic medium 50, thereby forming a new interference pattern on the holographic medium 50 by angular multiplexing. In other words, the incident angles of the first and the second reference beams are adjusted every time a new signal beam is irradiated onto the holographic medium 50. Herein, the arrangement angles of the two mirrors 106 and 114 must be adjusted by the first and the second incident angle control units 108 and 116 to be symmetrical with respect to the central axis of the cylindrical mirror 102.

Alternatively, it may be understood that the number of optical paths may be viewed if the optical paths allow a plurality of reference beams to be irradiated onto the entire circumferential surface of the cylindrical mirror. The reference beam can be splitted into N sub-reference beams. Furthermore, it may be understood that the number of mirrors forming the cylindrical mirror may be varied if the integrated reflective surfaces of the cylindrical mirrors form the 360°.

As described above, the present invention provides the holographic data recording apparatus and method capable of recording a plurality of holographic data in the same physical space of a holographic medium by angular multiplexing using a cylindrical mirror. Unlike the conventional holographic data recording apparatus and method of using a plurality of conical mirrors, the holographic data recording apparatus and method of the present invention do not require the replacement of the conical mirrors while recording a plurality of data on a holographic medium, thereby increasing the recording speed and reducing the cost thereof.

While the invention has been shown and described with respect to the preferred embodiments, it will be understood by those skilled in the art that various changes and modifications may be made without departing from the scope of the invention.

## Claims

1. A holographic data recording apparatus comprising:
a signal beam patterning unit for irradiating a signal beam onto a holographic medium, the signal beam including a data pattern to be recorded; and
a cylindrical optical body including a cylindrical reflective surface, by which a reference beam incident thereto is reflected toward the holographic medium at a predetermined angle,
wherein the data pattern is recorded on the holographic medium by interfering the signal beam with the reference beam on the holographic medium.

2. The holographic data recording apparatus of claim 1, wherein the signal beam patterning unit is a data mask having a bit pattern corresponding to the data pattern to be recorded, and the signal beam passes through the bit pattern to be irradiated onto the holographic medium.

3. The holographic data recording apparatus of claim 1, wherein the reference beam, reflected by the cylindrical optical body and then irradiated onto the holographic medium, is a taper-shaped beam having a circular cross-section at each end thereof, with the center of the circular cross-section located at a central axis of the holographic medium.

4. The holographic data recording apparatus of claim 1, wherein the cylindrical optical body includes a cylindrical mirror which reflects the reference beam incident thereto at reflection angles which are symmetrical around a central axis of the cylindrical mirror.

5. The holographic data recording apparatus of claim 1, wherein the reference beam irradiated onto the cylindrical optical body is rectangular-shaped.

6. The holographic data recording apparatus of claim 1, further comprising:
a rectangular beam generating unit for converting the reference beam which is circular-shaped into a reference beam which is rectangular-shaped and then irradiating the reference beam which is rectangular-shaped onto the cylindrical optical body.

7. The holographic data recording apparatus of claim 6, wherein the rectangular beam generating unit is a rectangular slot.

8. The holographic data recording apparatus of claim 1, wherein the cylindrical optical body includes a 360° angular reflective surface, and the reference beam is irradiated onto the entire 360° angular reflective surface.

9. The holographic data recording apparatus of claim 8, wherein the cylindrical optical body includes two semicylindrical mirrors individually having 180° angular reflective surfaces which are arranged to form a cylindrical mirror.

10. The holographic data recording apparatus of claim 1, wherein the reference beam includes a first reference beam and a second reference beam which are irradiated onto the cylindrical reflective surface of the cylindrical optical body at a same incident angle in directions symmetrical around a central axis of the cylindrical optical body, and then are reflected by the cylindrical reflective surface toward the holographic medium at a same reflection angle in directions symmetrical around the central axis of the cylindrical optical body.

11. The holographic data recording apparatus of claim 10, wherein each of the first reference beam and the second reference beam, reflected by the cylindrical optical body and then irradiated onto the holographic medium, is a half taper-shaped beam having a semicircular cross-section at each end thereof, with the center of the semicircular cross-section located at a central axis of the holographic medium.

12. The holographic data recording apparatus of claim 4, wherein the holographic medium is a circular disc, and the cylindrical mirror is arranged such that a focus thereof is located at a central axis of the holographic medium.

13. The holographic data recording apparatus of claim 1, further comprising:
an incident angle control unit for controlling an incident angle of the reference beam irradiated onto the cylindrical optical body.

14. A holographic data recording apparatus comprising:
a light source for generating a laser beam;
a first polarization beam splitting unit for splitting the laser beam into a signal beam and a reference beam;
a signal beam patterning unit for irradiating a signal beam onto a holographic medium, the signal beam including a data pattern to be recorded;
a cylindrical optical body including a cylindrical reflective surface, by which a reference beam incident thereto is reflected toward the holographic medium at a predetermined angle; and
an incident angle control unit for controlling the incident angle of the reference beam irradiated onto the cylindrical optical body,
wherein the data pattern is recorded on the holographic medium by interfering the signal beam with the reference beam on the holographic medium.

15. The holographic data recording apparatus of claim 14, further comprising:
a second polarization beam splitting unit for splitting the reference beam provided by the first polarization beam splitting unit into a first reference beam and a second reference beam which are irradiated onto the cylindrical optical body through a first reference beam path and a second reference beam path, respectively.

16. The holographic data recording apparatus of claim 14 or 15, wherein the first polarization beam splitting unit or the second polarization beam splitting unit is a polarization beam splitter.

17. The holographic data recording apparatus of claim 15, wherein the reference beam is rectangular-shaped.

18. The holographic data recording apparatus of claim 15, wherein the incident angle control unit includes:
a first incident angle control unit, provided on the first reference beam path, for controlling an incident angle of the first reference beam irradiated onto the cylindrical optical body; and
a second incident angle control unit, provided on the second reference beam path, for controlling an incident angle of the second reference beam irradiated onto the cylindrical optical body.

19. The holographic data recording apparatus of claim 15, further comprising:
a first mirror for reflecting the first reference beam incident thereto toward the cylindrical optical body, a first arrangement angle thereof being controlled by the first incident angle control unit; and
a second mirror for reflecting the second reference beam incident thereto toward the cylindrical optical body, a second arrangement angle thereof being controlled by the second incident angle control unit.

20. The holographic data recording apparatus of claim 19, wherein the first and the second incident angle control units respectively so control the first and the second arrangement angles as to arrange the first and the second mirrors to be symmetrical to each other around a central axis of the cylindrical optical body.

21. The holographic data recording apparatus of claim 19, further comprising:
a first and a second rectangular beam generating units for respectively converting the first and the second reference beams which are circular-shaped into a first and a second reference beams which are rectangular-shaped and then irradiating the first and the second reference beams which are rectangular-shaped onto the cylindrical optical body.

22. The holographic data recording apparatus of claim 21, wherein each of the first and the second rectangular beam generating units are rectangular slots.

23. The holographic data recording apparatus of claim 14 or 18, wherein the signal beam patterning unit is a data mask having a bit pattern corresponding to the data pattern, and the signal beam passes through the bit pattern to be irradiated onto the holographic medium.

24. The holographic data recording apparatus of claim 14, wherein the cylindrical optical body includes a cylindrical mirror which reflects the first and the second reference beams incident thereto at reflection angles which are symmetrical around a central axis of the cylindrical mirror.

25. The holographic data recording apparatus of claim 14, wherein the cylindrical optical body includes a 360° angular reflective surface,
wherein the first reference beam is irradiated onto a 180° angular part of the cylindrical reflective surface, while the second reference beam is irradiated onto a remaining 180° angular part of the cylindrical reflective surface.

26. The holographic data recording apparatus of claim 25, wherein the cylindrical optical body includes two semicylindrical mirrors individually having 180° angular reflective surfaces which are arranged to form a cylindrical mirror.

27. The holographic data recording apparatus of claim 26, wherein the holographic medium is a circular disc, and the cylindrical mirror is arranged such that a focus thereof is located at a central axis of the holographic medium.

28. The holographic data recording apparatus of claim 14 or 26, wherein each of the first reference beam and the second reference beam, reflected by the cylindrical optical body and then irradiated onto the holographic medium, is a half taper-shaped beam having a semicircular cross-section at each end thereof, with the center of the semicircular cross-section located at a central axis of the holographic medium, the two half taper-shaped beams forming a complete taper-shaped beam.

29. A holographic data recording apparatus comprising:
a signal beam patterning unit for irradiating a signal beam onto a holographic medium, the signal beam including a data pattern to be recorded; and
a taper-shaped beam generating unit for converting a reference beam incident thereto into a taper-shaped beam having a circular cross-section at each end thereof and then irradiating the converted reference beam onto the holographic medium,
wherein the data pattern is recorded on the holographic medium by interfering the signal beam with the reference beam on the holographic medium.

30. The holographic data recording apparatus of claim 29, wherein the taper-shaped beam generating unit is a cylindrical optical body having a 360° angular reflective surface formed by cylindrical mirrors.

31. A holographic data recording method for recording a data pattern on a holographic medium by interfering a signal pattern including the data pattern thereon with a reference beam on the holographic medium, the method comprising the steps of:
irradiating the reference beam onto a cylindrical optical body, which reflects the reference beam toward the holographic medium, thereby interfering the reference beam with the signal beam on the holographic medium to record the data pattern on the holographic medium; and
adjusting the incident angle of the reference beam irradiated onto the cylindrical optical body, thereby changing the incident angle of the reference beam irradiated onto the holographic medium after reflected by the cylindrical optical body in order to record a new data pattern on the holographic medium by angular multiplexing.

32. The holographic data recording method of claim 31, further comprising:
converting the reference beam of a circular shape into a reference beam of a rectangular shape, before the step of irradiating the reference beam onto the cylindrical optical body.

33. The holographic data recording method of claim 31, wherein the reference beam is splitted into a first reference beam and a second reference beam, and the first and the second reference beams are irradiated onto the cylindrical optical body at a same incident angle in directions symmetrical around a central axis of the cylindrical optical body, and then reflected by the cylindrical optical body toward the holographic medium at a same reflection angle in directions symmetrical around the central axis of the cylindrical optical body, so that the first and the second reference beams are interfered with the signal beam on the holographic medium in order to record the data pattern on the holographic medium.

34. The holographic data recording method of claim 33, wherein each of the first and the second reference beams, irradiated onto the holographic medium by the cylindrical optical body, is a half taper-shaped beam having a semicircular optical cross-section at each end thereof, with the center of the semicircular cross-section located at a central axis of the holographic medium, the two half taper-shaped beams forming a complete taper-shaped beam.

35. The holographic data recording method of claim 33, wherein, in order to record the new data pattern on the holographic medium by angular multiplexing, the incident angles of the first and the second reference beams, irradiated onto the cylindrical optical body, are changed while maintaining the incident angles thereof to be symmetrical to each other around the central axis of the cylindrical optical body.

36. A holographic data recording method comprising the steps of:
splitting a reference beam emitted from a light source into a first reference beam and a second reference beam;
irradiating the first and the second reference beams onto an optical body at first symmetrical angles which are symmetrical around a central axis of the optical body;
reflecting the first and the second reference beams by the optical body, thereby irradiating the first and the second reference beams onto a holographic medium at second symmetrical angles which are symmetrical around the central axis of the optical body; and
interfering the first and the second reference beams with a signal beam including a data pattern thereon on the holographic medium, thereby recording the data pattern on the holographic medium.

37. The holographic data recording method of claim 36, wherein a polarization beam splitter is used to split the reference beam into the first reference beam and the second reference beam.

38. The holographic data recording method of claim 36, further comprising the step of:
adjusting incident angles of the first and the second reference beams irradiated onto the optical body whenever a new signal beam is irradiated onto the holographic medium.

39. The holographic data recording method of claim 36, wherein the optical body which has a cylindrical reflective surface formed by one or more cylindrical mirrors reflects the first and the second reference beams towrad the holographic medium.

40. The holographic data recording method of claim 36, further comprising the step of:
converting the first and the second reference beams of circular shapes into reference beams of rectangular shapes.

41. The holographic data recording method of claim 36, wherein the first and the second reference beams irradiated onto the holographic medium are distributed at a 360° angle around the optical body.

42. A holographic data recording method comprising the steps of:
splitting a reference beam emitted from a light source into N sub-reference beams;
irradiating the sub-reference beams onto an optical body such that the sub-reference beams are directed to a central axis of the optical body;
reflecting the sub-reference beams by the optical body, thereby irradiating the sub-reference beams onto a holographic medium at predetermined incident angles which are symmetrical around the central axis of the optical body; and
interfering the sub-reference beams with a signal beam including a data pattern thereon on the holographic medium, thereby recording the data pattern on the holographic medium,
wherein N is a natural number.
